# EUROPÄISCHE PATENTSCHRIFT

(11) **EP 2 706 310 B1**
(45) Veröffentlichungstag und Bekanntmachung des Hinweises auf die Patenterteilung: **06.11.2019**
(21) Anmeldenummer: 12183507.8
(22) Anmeldetag: 07.09.2012
(51) Int. Cl.: F25B 31/00

(54) **Ölausgleichssystem**
Oil compensation system
Système de compensation d'huile

(43) Veröffentlichungstag der Anmeldung: 12.03.2014
(73) Patentinhaber: Emerson Climate Technologies GmbH, 13507 Berlin (DE)
(72) Erfinder: Bersch, Hans-Jürgen, 52152 Simmerath (DE); Weiring, Hans-Werner, 71334 Waiblingen (DE)
(74) Vertreter: Manitz Finsterwald Patent- und Rechtsanwaltspartnerschaft mbB

(56) Entgegenhaltungen:
- WO-A1-95/35462
- DE-A1- 4 202 600
- GB-A- 2 101 213
- GB-A- 2 107 905
- US-A- 4 697 431
- US-A- 6 125 642

## Beschreibung

Die vorliegende Erfindung betrifft ein Ölausgleichssystem, insbesondere für einen Verdichter einer Kältemaschine, mit einer Steuereinheit, einer durch die Steuereinheit gesteuerten Schaltvorrichtung zur Betätigung eines Aktors eines Ölausgleichsventils und einer gemeinsamen Stromversorgung für die Steuereinheit und den Aktor, welche eine Versorgungsspannung bereitstellt.

Derartige Ölausgleichssysteme sind grundsätzlich bekannt und werden beispielsweise verwendet, um den Ölstand von Verdichtern von Kältemaschinen in einem zulässigen Bereich zu halten. Werden insbesondere mehrere Verdichter parallel geschaltet, finden Ölausgleichssysteme ihre bevorzugte Anwendung, da sie als aktive Systeme im Vergleich zu bloßen passiven Ölausgleichsleitungen nicht aufwendig an die jeweilige Anwendung und/oder Anordnung der Verdichter angepasst werden müssen.

Ein Ölausgleichssystem gemäß dem Oberbegriff des Anspruchs 1 ist aus der GB 2 101 213 A bekannt. Die GB 2 107 905 A beschreibt eine Vorrichtung zur Temperaturregelung eines Kühlschranks, die eine Wandlereinheit, einen Optokoppler und eine Schaltvorrichtung umfasst.

Ein weiterer Vorteil der aktiven Ölausgleichssysteme ist die Überwachung eines Ölniveaus und eine damit einhergehende Alarmfunktion der Ölausgleichssysteme, falls das Ölniveau unter einen Grenzwert sinkt. So kann beispielsweise der Verdichter abgeschaltet werden, wenn ein Alarm ausgelöst wird.

Die für den Ölausgleich erforderliche Messung des Ölstandes kann dabei beispielsweise über einen Hallsensor oder durch optische Messung erfolgen. Wird ein sinkender Ölstand in dem Verdichter von der Steuereinheit des Ölausgleichssystems erkannt, wird der Aktor des Ölausgleichsventils angesteuert, wodurch das Ölausgleichsventil Öl in das Kurbelgehäuse des Verdichters nachfließen lässt.

Das Ölausgleichssystem kann dabei sowohl einzelne Verdichter als auch parallel geschaltete Verdichter von Verbundanlagen mit Öl zur Schmierung versorgen. Bei einzelnen Verdichtern kann das Ölausgleichssystem insbesondere dann eingesetzt werden, wenn der Verdichter keine interne Ölpumpe und/oder keinen Öldifferenzdruckschalter besitzt, wie dies beispielsweise bei Scroll-Verdichtern der Fall ist.

Bekannte Ölausgleichssysteme sind jeweils für eine bestimmte Systemspannung ausgelegt. Dies bedeutet, das Ölausgleichssystem muss in mehreren Varianten (beispielsweise für 24 V, 110 V und 230 V) hergestellt und vorrätig gehalten werden, um Ölausgleichssysteme für verschiedene Anwendungen bzw. verschiedene Länder bereitstellen zu können. Eine derartige parallele Entwicklung, Fertigung und Lagerhaltung mehrerer, ähnlicher Ölausgleichssysteme ist dabei aufwendig und teuer.

Es ist daher eine der Erfindung zugrunde liegende Aufgabe, ein Ölausgleichssystem anzugeben, welches auf einfache Weise an verschiedene Versorgungsspannungen anpassbar ist.

Diese Aufgabe wird durch ein Ölausgleichssystem gemäß Anspruch 1 gelöst.

Die vorliegende Erfindung ist offenbart im unabhängigen Anspruch 1. Weitere Ausführungen sind offenbart in den abhängigen Ansprüchen.

Da unabhängig von der jeweils vorhandenen Versorgungsspannung immer die gleiche Systemspannung verwendet werden kann, lässt sich derselbe Typ von Steuereinheit für alle Versorgungsspannungen verwenden. Lediglich der Aktor oder eine Ansteuerung des Aktors müssen an die Versorgungsspannung angepasst werden. Es sind für verschiedene Versorgungsspannungen also nur geringfügige Modifikationen an dem Ölausgleichssystem nötig. Die Entwicklungs-, Herstellungs- und Lagerkosten können somit deutlich reduziert werden.

Vorteilhafte Ausführungsformen der Erfindung sind der Beschreibung, den Zeichnungen sowie den Unteransprüchen zu entnehmen.

Erfindungsgemäß umfasst das Ölausgleichssystem eine Wandlereinheit, welche die Versorgungsspannung in die Systemspannung umwandelt. Die Steuereinheit ist der Wandlereinheit nachgeschaltet und wird von der Wandlereinheit versorgt. Mittels der Wandlereinheit kann zugleich eine galvanische Trennung zwischen der Versorgungsspannung und der Systemspannung erfolgen.

Gemäß einer Ausführungsform ist die Versorgungsspannung größer als die Systemspannung. Dies erleichtert zum einen die Umwandlung der Versorgungsspannung (z.B. 230 V) in die Systemspannung (z.B. 24 V) und reduziert zum anderen die einzuhaltenden Sicherheitsvorschriften, wenn beispielsweise als Systemspannung eine Kleinspannung verwendet wird. Alternativ kann aber auch eine Versorgungsspannung gewählt werden, die genauso groß ist wie die Systemspannung. In diesem Fall braucht keine Umwandlung der Versorgungsspannung in die Systemspannung stattzufinden.

Bevorzugt ist die Wandlereinheit ein Transformator, insbesondere ein Ringkerntransformator oder ein Printtransformator. Die Verwendung eines Transformators ermöglicht eine effiziente Umwandlung der zur Versorgung der Steuereinheit benötigten elektrischen Energie. Der Transformator stellt zudem eine galvanische Trennung zwischen der Stromversorgung und der Systemspannung sicher. Die Verwendung eines Transformators ist dann besonders vorteilhaft, wenn die Steuereinheit mit einem Wechselstrom betreibbar ist, da dann nach dem Transformator keine Gleichrichtung mehr erfolgen muss.

Alternativ ist ebenso die Verwendung eines Schaltnetzteils als Wandlereinheit möglich, welches die Versorgungsspannung in die Systemspannung umwandelt. Das Schaltnetzteil kann zudem einen weiten Bereich möglicher Versorgungsspannungen abdecken, beispielsweise von 110 V bis 230 V.

Erfindungsgemäß sind die Wandlereinheit und die Schaltvorrichtung zum Betätigen des Aktors in einem gemeinsamen Gehäuse angeordnet. Die Schaltvorrichtung wird von der Steuereinheit mit der Systemspannung angesteuert und ist dabei imstande, die Versorgungsspannung zu schalten und den Aktor mit der Versorgungsspannung zu aktivieren. Da sowohl die Wandlereinheit als auch die Schaltvorrichtung eine Verbindung mit der Versorgungsspannung benötigen, ist es ein Vorteil der vorliegenden Erfindung, die Wandlereinheit und die Schaltvorrichtung in einem gemeinsamen Gehäuse anzuordnen. Zudem müssen Sicherheitsrichtlinien für die beispielsweise als Niederspannung ausgelegte Versorgungsspannung dann nur in dem gemeinsamen Gehäuse von Wandlereinheit und Schaltvorrichtung eingehalten werden, nicht aber für die Steuereinheit berücksichtigt werden. Alternativ kann auch der Aktor zusätzlich in dem gemeinsamen Gehäuse angeordnet sein.

Ebenfalls erfindungsgemäß ist das gemeinsame Gehäuse ein an einem Versorgungskabel angebrachtes Steckergehäuse. Das Steckergehäuse ist durch eine Steckverbindung auf einfache und werkzeuglose Weise mit dem Ölausgleichsventil verbindbar und ebenso lösbar. Über das Versorgungskabel erfolgt die Stromversorgung der Wandlereinheit sowie des Aktors mit der Versorgungsspannung. Aufgrund der einfachen Lösbarkeit von dem Ölausgleichsventil kann das gemeinsame Gehäuse auf einfache Weise ausgetauscht werden, wodurch das Ölausgleichssystem problemlos mit einer geeigneten Wandlereinheit für eine andere Versorgungsspannung ausgestattet werden kann.

Gemäß einer Ausführungsform beträgt die Systemspannung 24 V und die Versorgungsspannung wahlweise 24 V oder 230 V. Sowohl die Systemspannung als auch die Versorgungsspannung können dabei als Wechselspannung ausgelegt sein. Insbesondere durch die Wahl einer Versorgungsspannung von 230 V kann das Ölausgleichssystem beispielsweise an Steckdosen eines Niederspannungsnetzes angeschlossen werden.

Bevorzugt ist der Aktor eine Magnetspule. Durch die Magnetspule lässt sich ein einfaches und zuverlässiges Öffnen und Schließen des Ölausgleichsventils erreichen.

Vorteilhafterweise umfasst die Schaltvorrichtung ein Relais oder einen Optokoppler, welcher/ s von der Steuereinrichtung ansteuerbar ist und den Aktor schaltbar mit der Stromversorgung verbindet. Sowohl durch das Relais als auch durch den Optokoppler können mit der Systemspannung Versorgungsspannungen durchgeschaltet werden, die gleich oder größer als die Systemspannung sind, so dass der Aktor das Ölausgleichsventil öffnen oder schließen kann. Vorteilhafterweise gestatten auch das Relais und der Optokoppler eine galvanische Trennung zwischen System- und Versorgungsspannung.

Nachfolgend wird die Erfindung rein beispielhaft anhand möglicher Ausführungsformen unter Bezugnahme auf die beigefügten Zeichnungen beschrieben. Es zeigen:
- Fig. 1a: eine Schaltplandarstellung eines erfindungsgemäßen Ölausgleichssystems mit Wandlereinheit und Optokoppler;
- Fig. 1b: eine Schaltplandarstellung eines erfindungsgemäßen Ölausgleichssystems mit Wandlereinheit und Relais;
- Fig. 2: eine Schaltplandarstellung eines erfindungsgemäßen Ölausgleichssystems ohne Wandlereinheit;
- Fig. 3: den schematischen Aufbau eines erfindungsgemäßen Ölausgleichssystems.

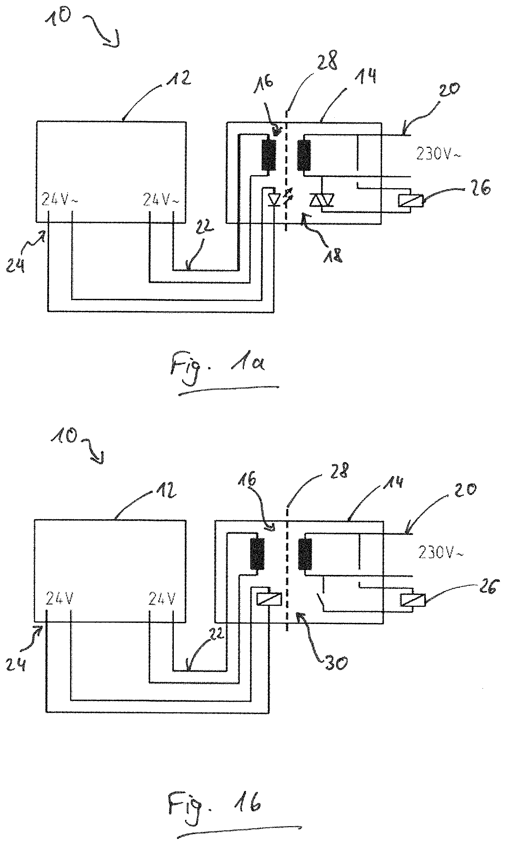

Fig. 1a zeigt eine erste Ausführungsform eines Ölausgleichssystems 10, welches eine Steuereinheit 12 und ein Steckergehäuse 14 umfasst, wobei das Steckergehäuse 14 ein von einem Gehäuse der Steuereinheit 12 unabhängiges Gehäuse ist. In dem Steckergehäuse 14 sind ein Transformator 16 sowie ein Optokoppler 18 vorgesehen. Der Transformator 16 wird primärseitig mit einer Versorgungsspannung 20 mit z.B. 230 V Wechselspannung versorgt. Sekundärseitig gibt der Transformator 16 eine Systemspannung 22 mit z.B. 24 V Wechselspannung aus.

Die Systemspannung 22 wird an die Steuereinheit 12 übertragen, wobei die Systemspannung 22 die Stromversorgung der Steuereinheit 12 sicherstellt.

Detektiert die Steuereinheit 12 einen zu niedrigen Ölstand in einem (nicht gezeigten) Verdichter, wird an einem Signalausgang 24 der Steuereinheit 12 eine Wechselspannung mit 24 V ausgegeben. Der Signalausgang 24 ist mit einem Eingang des Optokopplers 18 elektrisch verbunden.

Ausgangsseitig ist der Optokoppler 18 sowohl mit einer Magnetspule 26 als auch mit der Versorgungsspannung 20 verbunden. Durch Aktivieren des Optokopplers 18 mittels des Signalausgangs 24 wird die Versorgungsspannung 20 an die Magnetspule 26 angelegt, wodurch die Magnetspule 26 aktiviert und das Ölausgleichsventil geöffnet wird, damit Öl in den Verdichter nachfließen kann.

In dem Steckergehäuse 14 erfolgt eine galvanische Trennung zwischen der Versorgungsspannung 20 und der Systemspannung 22, die durch eine Linie 28 angedeutet ist.

Fig. 1b zeigt eine zweite Ausführungsform eines Ölausgleichssystems 10. Diese zweite Ausführungsform unterscheidet sich von der ersten Ausführungsform lediglich darin, dass anstatt des Optokopplers 18 ein Relais 30 verwendet wird, welches die Versorgung der Magnetspule 26 mit der Versorgungsspannung 20 abhängig von dem Signalausgang 24 ein- oder ausschaltet.

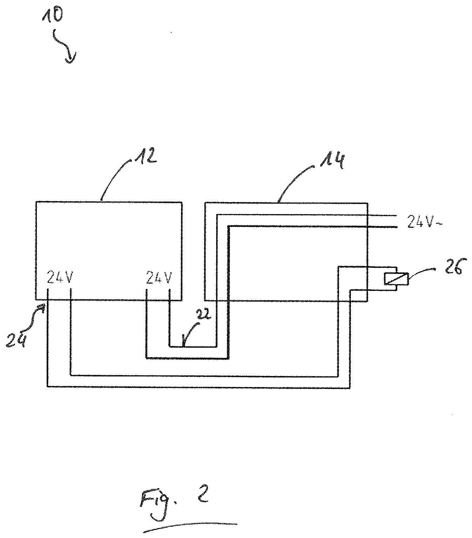

In Fig. 2 ist eine dritte Ausführungsform eines Ölausgleichssystems dargestellt, bei welcher die Versorgungsspannung 20 gleich der Systemspannung 22 ist. Die Systemspannung 22 mit 24 V Wechselspannung wird extern bereitgestellt (beispielsweise durch einen externen Transformator) und durch das Steckergehäuse 14 lediglich durchgeleitet.

Bei der in Fig. 2 gezeigten Ausführungsform ist weder ein Optokoppler 18 noch ein Relais 30 notwendig, da die Magnetspule 26 in Fig. 2 mit der Systemspannung 22 betreibbar ist. Die Magnetspule 26 ist deshalb direkt mit dem Signalausgang 24 verbunden und wird zum Öffnen des Ölausgleichsventils mit 24 V von dem Signalausgang 24 beaufschlagt.

Wie die in Fig. 1a, 1b und 2 dargestellten Ausführungsformen zeigen, ist eine einfache Anpassung des Ölausgleichssystems 10 an verschiedene Versorgungsspannungen 20 möglich, indem lediglich der Transformator 16 und der Optokoppler 18 bzw. das Relais 30 an die jeweils verwendete Versorgungsspannung 20 angepasst werden. Wird von extern bereits eine Spannung zur Verfügung gestellt, die der Systemspannung 22 entspricht, können Transformator 16, Optokoppler 18 sowie Relais 30 ganz entfallen. Die Anpassung erfolgt dabei durch einfachen Austausch des Steckergehäuses 14. Die übrigen Komponenten des Ölausgleichssystems 10 können unverändert beibehalten werden.

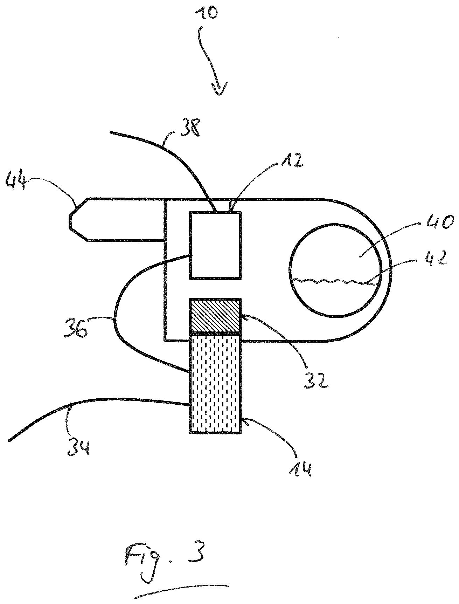

Fig. 3 zeigt schematisch den Aufbau eines Ölausgleichssystems 10 gemäß der ersten und zweiten Ausführungsform in Außenansicht. Das Ölausgleichssystem 10 umfasst ein Ölausgleichsventil 32 mit integrierter (in Fig. 3 nicht gezeigter) Magnetspule 26, an welches das Steckergehäuse 14 angesteckt ist. Der in dem Steckergehäuse 14 angeordnete (in Fig. 3 nicht gezeigte) Transformator 16 wird mittels einer Anschlussleitung 34 mit der Versorgungsspannung 20 verbunden. Die von dem Transformator 16 sekundärseitig ausgegebene Systemspannung 22 versorgt die Steuereinheit 12 über eine Versorgungsleitung 36 mit der Systemspannung 22. In der Versorgungsleitung 36 sind zudem (nicht gezeigte) Signalleitungen angeordnet, mittels welcher die Magnetspule 26 durch den Signalausgang 24 aktivierbar ist. Zur Anpassung des Ölausgleichssystems 10 an eine andere Versorgungsspannung 20 muss lediglich das Steckergehäuse 14 von dem Ölausgleichsventil 32 abgezogen und durch einen an die Versorgungsspannung 20 angepassten Stecker 14 ersetzt werden.

Zur Ausgabe von Fehlersignalen weist das Ölausgleichssystem 10 eine Signalleitung 38 auf, die mit einem (nicht gezeigten) Verdichter einer Kältemaschine verbunden ist und mittels welcher beispielsweise bei zu niedrigem Ölstand ein Abschalten des Verdichters bewirkt werden kann.

Das Ölausgleichssystem 10 umfasst ferner ein Schauglas 40, in welchem ein Ölstand 42 abgelesen werden kann. Das Ölausgleichssystem 10 weist weiterhin einen Ölanschluss 44 auf, über welchen dem Ölausgleichssystem 10 Öl zugeleitet wird, das bei zu niedrigem Ölstand des Verdichters durch Öffnen des Ölausgleichsventils 32 an den Verdichter weitergegeben wird.

### Bezugszeichenliste

- 10: Ölausgleichssystem
- 12: Steuereinheit
- 14: Steckergehäuse
- 16: Transformator
- 18: Optokoppler
- 20: Versorgungsspannung
- 22: Systemspannung
- 24: Signalausgang
- 26: Magnetspule
- 28: galvanische Trennung
- 30: Relais
- 32: Ölausgleichsventil
- 34: Anschlussleitung
- 36: Versorgungsleitung
- 38: Signalleitung
- 40: Schauglas
- 42: Ölstand
- 44: Ölanschluss

## Patentansprüche

1. Ölausgleichssystem (10), insbesondere für einen Verdichter einer Kältemaschine, mit
einer Steuereinheit (12),
einer durch die Steuereinheit (12) gesteuerten Schaltvorrichtung (18, 30) zur Betätigung eines Aktors (26) eines Ölausgleichsventils (32) und
einer gemeinsamen Stromversorgung für die Steuereinheit (12) und den Aktor (26), welche eine Versorgungsspannung (20) bereitstellt, wobei die Steuereinheit (12) für einen Betrieb bei einer Systemspannung (22) ausgelegt ist und der Aktor (26) für die Versorgungsspannung (20) ausgelegt ist,
**dadurch gekennzeichnet, dass**
eine Wandlereinheit (16) vorgesehen ist, welche die Versorgungsspannung (20) wahlweise in eine von der Versorgungsspannung (20) verschiedene oder gleiche Systemspannung (22) umwandelt, und
die Wandlereinheit (16) und die Schaltvorrichtung (18, 30) in einem gemeinsamen Gehäuse (14) angeordnet sind, welches ein an einem Versorgungskabel (36) angebrachtes Steckergehäuse (14) ist.

2. Ölausgleichssystem (10) nach Anspruch 1,
**dadurch gekennzeichnet, dass** die Versorgungsspannung (20) größer als die Systemspannung (22) ist.

3. Ölausgleichssystem (10) nach einem der vorstehenden Ansprüche,
**dadurch gekennzeichnet, dass**
die Wandlereinheit (16) ein Transformator (16), insbesondere ein Ringkerntransformator oder ein Printtransformator, ist.

4. Ölausgleichssystem (10) nach einem der vorstehenden Ansprüche,
**dadurch gekennzeichnet, dass**
die Systemspannung (22) 24 V und die Versorgungsspannung (20) wahlweise 24 V oder 230 V beträgt.

5. Ölausgleichssystem (10) nach einem der vorstehenden Ansprüche,
**dadurch gekennzeichnet, dass**
der Aktor (26) eine Magnetspule (26) ist.

6. Ölausgleichssystem (10) nach einem der vorstehenden Ansprüche,
**dadurch gekennzeichnet, dass**
die Schaltvorrichtung (18, 30) ein Relais (30) oder einen Optokoppler (18) umfasst, welcher/s von der Steuereinrichtung (12) ansteuerbar ist und den Aktor (26) schaltbar mit der Stromversorgung verbindet.

## Claims

1. An oil compensation system (10), in particular for a compressor of a refrigerating machine, comprising
a control unit (12);
a switching apparatus (18, 30) controlled by the control unit (12) for actuating an actuator (26) of an oil compensation valve (32); and
a common power supply for the control unit (12) and the actuator (26) that provides a supply voltage (20), wherein the control unit (12) is adapted for operation at a system voltage (22) and the actuator (26) is adapted for the supply voltage (20),
**characterized in that**
a converter unit (16) is provided which selectively converts the supply voltage (20) into a system voltage (22) which is different from or the same as the supply voltage (20); and
**in that** the converter unit (16) and the switching apparatus (18, 30) are arranged in a common housing (14) which is a plug housing (14) attached to a supply cable (36).

2. An oil compensation system (10) in accordance with claim 1,
**characterized in that**
the supply voltage (20) is greater than the system voltage (22).

3. An oil compensation system (10) in accordance with one of the preceding claims,
**characterized in that**
the converter unit (16) is a transformer (16), in particular a toroidal transformer or a PCB transformer.

4. An oil compensation system (10) in accordance with any one of the preceding claims,
**characterized in that**
the system voltage (22) amounts to 24 V and the supply voltage (20) selectively amounts to 24 V or 230 V.

5. An oil compensation system (10) in accordance with any one of the preceding claims,
**characterized in that**
the actuator (26) is a magnetic coil (26).

6. An oil compensation system (10) in accordance with any one of the preceding claims,
**characterized in that**
the switching apparatus (18, 30) comprises a relay (30) or an optocoupler (18) which can be controlled by the control device (12) and which switchably connects the actuator (26) to the power supply.

## Revendications

1. Système de compensation d'huile (10), en particulier pour un compresseur d'une machine frigorifique, comportant
une unité de commande (12),
un dispositif de commutation (18, 30) commandé par l'unité de commande (12) et destiné à actionner un actionneur (26) d'une vanne de compensation d'huile (32), et
une alimentation électrique commune pour l'unité de commande (12) et pour l'actionneur (26), qui fournit une tension d'alimentation (20), l'unité de commande (12) étant conçue pour fonctionner à une tension système (22) et l'actionneur (26) étant conçu pour la tension d'alimentation (20),
**caractérisé en ce que**
il est prévu un ensemble convertisseur (16) qui convertit la tension d'alimentation (20) sélectivement en une tension système (22) différente ou égale à la tension d'alimentation (20),
et l'ensemble convertisseur (16) et le dispositif de commutation (18, 30) sont disposés dans un boîtier commun (14) qui est un boîtier d'enfichage (14) monté sur un câble d'alimentation (36).

2. Système de compensation d'huile (10) selon la revendication 1,
**caractérisé en ce que**
la tension d'alimentation (20) est supérieure à la tension système (22).

3. Système de compensation d'huile (10) selon l'une des revendications précédentes,
**caractérisé en ce que**
l'ensemble convertisseur (16) est un transformateur (16), en particulier un transformateur toroïdal ou un transformateur pour circuit imprimé.

4. Système de compensation d'huile (10) selon l'une des revendications précédentes,
**caractérisé en ce que**
la tension système (22) est de 24 V et la tension d'alimentation (20) est au choix de 24 V ou de 230 V.

5. Système de compensation d'huile (10) selon l'une des revendications précédentes,
**caractérisé en ce que**
l'actionneur (26) est une bobine de solénoïde (26).

6. Système de compensation d'huile (10) selon l'une des revendications précédentes,
**caractérisé en ce que**
le dispositif de commutation (18, 30) comprend un relais (30) ou un optocoupleur (18), qui peut être piloté par l'unité de commande (12) et qui relie l'actionneur (26) de manière commutable à l'alimentation électrique.
